# EUROPEAN PATENT SPECIFICATION

(11) **EP 1 801 159 B1**
(45) Date of publication and mention of the grant of the patent: **21.07.2010**
(21) Application number: 06256551.0
(22) Date of filing: 22.12.2006
(51) Int. Cl.: C08L 67/02, C08G 63/189

(54) **A polytrimethylene naphthalate and method of making the same**
Polytrimethylennaphthalat und Verfahren zu dessen Herstellung
Naphthalate polytrimétylène et procédé de fabrication

(30) Priority: 26.12.2005 IN MU16202005
(43) Date of publication of application: 27.06.2007
(73) Proprietor: Futura Polyesters Limited, Mumbai 400 013 (IN)
(72) Inventor: Kulkarni, Sanjay Tammaji, Chennai 600 068, Tamil Nadu (IN)
(74) Representative: Williams, Paul Edwin

(56) References cited:
- JP-A- 2003 320 522
- US-A- 5 294 695
- US-A1- 2002 048 682
- US-A1- 2004 222 154
- US-B1- 6 350 895
- US-B1- 6 525 265

## Description

### Field of the Invention

This invention relates to methods of manufacturing polytrimethylene naphthalates (PTNs) (also known as polypropylene naphthalates (PPNs)) and PTN polymer obtained by said methods.

In particular, this invention relates to PTNs and envisages processes for manufacturing PTNs, that are substantially free of acrolein, e.g., not in the detectable range.

### Background of the Invention

Polyethylene terephthalate (PET) resins are widely used in the food packaging, bottle, and film industries. PET bottles have a large market share in the carbonated soft drink, fruit juice and bottled water sectors. These products have a shelf life of 8 to 12 weeks, over which period the gas permeability properties of PET are sufficient. However, alcoholic beverages such as beer and oxygen sensitive juices are more vulnerable to oxygen and carbon dioxide diffusion. To overcome the excessive gas ingress or egress characteristics of PET, bottle industry manufacturers use polyesters that have lower gas permeability. For example, storing beer in a PET bottle would require a barrier against CO₂ egress and O₂ ingress, while also retaining clarity and strength. The ideal barrier PET bottle for applications such as beer is a inonolayer polyester structure in which a barrier resin or oxygen scavenger, or both, is blended with PET. New barrier materials such as nylon-based nanocomposites and "passive-active" barrier systems have also been used. The latter are dual-acting formulations of a passive barrier material and an active oxygen scavenger that blocks O₂ entry and also absorbs O₂ from the head space and bottle contents. However, in most cases these materials do not reduce the gas permeability sufficiently.

Polyethylene 2,6-naphthalate (PEN), a cousin of PET, typically delivers a five-fold improvement in both CO₂ and O₂ barrier versus monolayer PET, along with higher heat resistance and good clarity. PEN has a Tg of 122 °C, far exceeding that for PET, thereby allowing PEN blend monolayer bottles to be pasteurized. Although PEN is far more effective as a passive barrier compared to PET, it is normally blended with PET because of PEN's high cost.

Another polyester that is closely related to PEN is polytrimethylene naphthalate (PTN), which has barrier properties for O₂ and CO₂ that are far superior to PEN's, with transmission rates of O₂ and CO₂ that are about 25% less compared to PEN films. Low concentrations of PTN blended with PET provide a better and more cost effective passive barrier for specialized applications.

However, during the manufacture of PTN, acrolein or propenol is generated due to the presence of dipropylene glycol (DPG), which is formed by the dehydration of 1,3 propane diol (PDO). Acrolein is an unsaturated aldehyde that is highly reactive and highly toxic. Acrolein cross-links DNA and inhibits the activities of some enzymes (including cytochrome P450 and glutathionine-S-transferase) *in vitro* by reacting with sulfhydryl groups at active sites. Physiologically, acrolein suppresses pulmonary antibacterial defenses, produces irritation of the respiratory tract, increases airway resistance and tidal volume, decreases respiratory frequency, and may cause hypertension and tachycardia. Contact with acrolein may cause skin burns, erythema, and edema. Exposure to acrolein vapor concentrations as low as 10 ppm can lead to an asthmatic reaction, pulmonary edema, and death.

Acrolein is highly flammable and bums to produce irritating, corrosive and/or toxic gases. In the absence of an inhibitor, highly exothermic polymerization occurs at room temperature, catalysed by light and air or in the presence of traces of acids or strong bases. Acrolein vapor can travel to a source of ignition and flash back. Acrolein is therefore considered a dangerous contaminant that negatively affects the application of PTN while processing its melt at high temperatures, particularly in containers for sensitive beverages such as beer and fruit juices.

PTN and / or its copolyesters have been used to make fiber and films but no information has been reported on their acrolein content.

Patent No. GB1115767 describes several block copolyesters consisting of a crystallizable polyester and a rubbery polyester. PTN is mentioned as one of the crystallizable polyesters.

Patent No. GB 1165312 describes helically crimpable composite staple fibers comprising two polymeric components. PTN is mentioned as a polyester component.

U.S. Patent No. 6,525,165 B1 describes laminated aromatic polyester films containing PTN. Only laboratory scale preparation of PTN is exemplified and no details about the physical properties of the polymer are provided, with the exception of color, which is described as 65 ≤ L-b and b ≤ 10, where L and b are color values by Lab method, which indicates the polymer color is in a satisfactory range. This could be due to the use of titanium tetrabutoxide as the catalyst. The PTN film is about 6 times less permeable to moisture and oxygen as compared to PET film.

U.S. Patent Application No. 20030143397 describes copolyester fiber that is resistant to both hydrolysis and fatigue from flexing and is capable of withstanding long term continuous usage at high temperature and humidity. One of the components used in the copolyester is PTN. No information is given about the process of making PTN.

Japanese Patent No. 2003320522 describes a method for producing a PTN composition by uniformly dispersing inert particles, which provides surface smoothness for film applications.

U.S. Patent No. 6,740,402 describes a polyester fiber comprising a copolyester of PET and PEN along with 1,4-cyclohexanedimethanol (CHDM) as a glycol modifier. Little information is provided on the laboratory preparation of PTN and its copolyesters or details on the physical properties of the polymer.

A need therefore exists for a PTN that does not contain, or contains safe levels of, acrolein, and methods of manufacturing same.

### Summary of the Invention

In one aspect, the invention provides polytrimethylene naphthalate (PTN) resins in which the formation of DPG is reduced, resulting in a decrease in the generation of acrolein in the resin, thereby providing a PTN polymer substantially free of acrolein. In an embodiment, the invention provides an SSP resin of PTN having acrolein content below the detectable limit, as measured by gas chromotography. In an embodiment, the invention provides an amorphous PTN polymer with an I.V. in the range of about 0.40 to about 0.50 dL/g. In another embodiment, the invention provides a polymer with improved color as measured by CIE 'L', 'a', and 'b' values.

In another aspect, the invention provides batch plant manufacturing processes for producing safe and effective passive PTN barrier resins that contain little or substantially no detectable acrolein. In an embodiment, the process comprises the use of at least two reactors. In another embodiment, the process comprises the use of three reactors.

The present invention provides a method of making a polytrimethylene naphthalate (PTN) polymer that is substantially free of acrolein, the method comprising the steps of transesterifying naphthalene dicarboxylic acid dimethyl ester (NDC) and 1,3-Propane diol (PDO) in the presence of a transesterification catalyst to form a prepolymer, and polymerizing the prepolymer in the presence of an additive, thereby forming a polymer that is substantially free of acrolein; wherein:
the transesterification catalyst is at least one compound selected from a group consisting of titanium acetate, calcium acetate, zinc acetate, manganese acetate, antimony trioxide, antimony triacetate, and cobalt acetate;
the transesterifying step is carried out at a temperature of about 200°C to about 265°C, preferably at about 200°C to about 250°C; and
the transesterification catalyst is added at the start of the transesterifying step; and
the additive comprises at least one end capping agent selected from a group consisting of monovalent aromatic hydroxy compounds and their haloformates, monovalent carboxylic acids and their halide derivatives, carbonic acid derivatives, tetrabutylphosphonium acetate (TBPA), ethylene carbonate, sodium methoxide, sodium phosphate, and sodium citrate.

In an embodiment, the polymerising step is carried out in the presence of one or more of a polymerization catalyst and a thermal stabilizer, wherein the thermal stabilizer is at least one compound selected from a group consisting of orthophosphoric acid (OPA) and Triethylphophonoacetate (TEPA) and the polymerization catalyst is at least one compound selected from a group consisting of tetrabutyl titanate (TnBT), antimony trioxide, and butylstannoic acid.

In an embodiment, one or more nucleating agents, antioxidants, and/or toners is added during the esterifying step. These components may be added simultaneously or sequentially, and in any order or combination.

In an embodiment, the esterifying step is carried out at about 200°C to about 265°C for about 4 to about 7 hours. In certain embodiments, the esterifying step comprises atmospheric distillation and vacuum distillation. For example, the atmospheric distillation is carried out at about 1050 mbar for about 200 minutes to about 360 minutes and the vacuum distillation is carried out at about 400 mbar for about 20 minutes to about 60 minutes.

In an embodiment, the transesterification catalyst is a compound comprising calcium, zinc, manganese, cobalt, antimony, titanium, tin, or a combination thereof. For example, the transesterification catalyst may be titanium acetate, calcium acetate, zinc acetate, manganese acetate, antimony trioxide, antimony triacetate, cobalt acetate, or a combination thereof.

In an embodiment, the nucleating agent is sodium benzoate, nano silica, nano clay, polybutylene naphthalate (PBN), ethylene acrylic acid sodium ionomer, micronized sorbitol, sodium salicylates, tungsten trioxide, or a combination thereof.

In an embodiment, the antioxidant is octadecyl 3,5-di-t-butyl-4- hydroxyhydrocinnamate, 3,5-di-t-butyl-4-hydroxyphenyl propionic acid methyl ester, benzenepropionic acid bis( dimethyl ethyl) hydroxy methyl ester, or a combination thereof.

In an embodiment, the toner is a red toner or a blue toner.

In an embodiment, the polymerizing step is carried out in the presence of one or more of a polymerization catalyst, and/or thermal stabilizer, toner, at less than about 2 mbar at about 230°C to about 270 °C for about 2 to about 7 hours. In an embodiment, the polymerizing step is carried out at less than about 2 mbar of pressure.

In an embodiment, the methods of the invention further comprise the step of transferring the prepolymer to a polyreactor after the transesterifying step.

In an embodiment, the polymerization catalyst is a compound comprising antimony, titanium, tin, or a combination thereof. For example, the polymerization catalyst may be tetrabutyl titanate (TnBT), butylstannoic acid, antimony trioxide, or a combination thereof.

In an embodiment, the thermal stabilizer may be orthophosphoric acid (OPA), triethylphophonoacetate (TEPA), or a combination thereof. In an embodiment, the thermal stabilizer is a mixture of OPA and TEPA, each used in the range of about 20 ppm to about 300 ppm as phosphorous, preferably in the range of about 30 ppm to about 150 ppm.

In an embodiment, the end capping agent is a monovalent aromatic hydroxy compounds or its haloformate, a monovalent carboxylic acid or its halide derivative, or a carbonic acid derivative, or a combination thereof. For example, the end capping agent may be tetrabutylphosphonium acetate (TBPA), ethylene carbonate, sodium methoxide, sodium phosphate, sodium citrate, or a combination thereof. It is believed that the end capping agent reduces the -COOH end group content in the PTN resin, which facilitates the reduction of the formation of acrolein.

In an embodiment, the methods further comprise a solid state polymerization (SSP) process comprising the step of precrystallizing the polymer at about 140 °C to form precrystallized chips. In another embodiment, the method further comprises the step of devolatilisation in which the temperature of the pre-crystallized chips is increased from 35°C to about 180 °C with nitrogen bleeding for about 5 to 8 hours and this is followed by crystallization in which the polyester chips is held at 180°C for about 1.5 to 3 hours at about 0.5 bar gauge pressure and then evacuated to vacuum below 1 mbar.

### Detailed Description of the Invention

The invention provides manufacturing processes for polytrimethylene naphthalates (PTNs) with little or no acrolein content by reacting Dimethyl 2,6-naphthalenedicarboxylate (NDC) with 1,3-Propane diol (PDO) to produce transesterification compounds comprising bis(beta-hydroxypropyl)naphthalate or low molecular weight polymers thereof and polymerizing the resultant transesterification compounds to produce polypropylene naphthalate polymers. The method minimizes the formation of DPG, thereby minimizing the formation of acrolein. Not to be limited to any particular theory, DPG formation is believed to be controlled by a combination of resin composition, low processing temperature, and the addition of one or more of transesterification catalysts, nucleating agents, antioxidants, toners, polymerization catalysts, thermal stabilizers, and/or end capping agents. In addition, in an embodiment, the transesterifying step is carried out at about 215°C compared to the usual 245°C and the polymerizing step is conducted at about 230 °C compared to the usual 265°C. Other conventional processes use a maximum of about 280 °C, which is not desirable for a resin of good quality and color. The invention therefore provides lower processing temperatures and superior thermal stability as evidenced by lower -COOH end groups, i.e., about 3 meq/kg instead of the normal high of about 15 meq/kg. The methods of the invention provide PTN polymers having less acrolein and propylene glycol by-products, with improved color.

The term "substantially free" in reference to acrolein content means that acrolein is not detectable by gas chromatography, e.g., using standard methods on a 6820 Agilent GC System (Agilent Technologies Inc., Santa Clara, CA) or that it is present in the PTN polymer in less than about 10 ppm, less than about 9 ppm, less than about 8 ppm, less than about 7 ppm, less than about 6 ppm, less than about 4 ppm, less than about 4 ppm, less than about 3 ppm, less than about 2 ppm, less than about 1 ppm, less than about 0.5 ppm, less than about 0.1 ppm, or less than about 0.05 ppm. In a particular embodiment, the acrolein content is less than about 0.1 ppm.

Transesterification catalysts useful in the invention include compounds that contain, for example, calcium, zinc, manganese, cobalt, antimony, titanium, or tin, and combinations thereof. Titanium acetate, calcium acetate, zinc acetate, manganese acetate, antimony trioxide, antimony triacetate, and/or cobalt acetate may be used in the concentration range of about 20 to about 300 ppm, preferably about 30 to about 250 ppm. Antimony trioxide as Sb may be used in the concentration range of about 100 to about 250 ppm. Cobalt acetate may be used in the rang of about 20 to about 100 ppm, preferable about 30 to about 60 ppm. Tin catalyst acts as catalyst both for transesterification and polymerization and therefore may be added in two parts, both in the beginning of the transesterifying step and the end of the transesterifying step in the range of about 50 to about 500 ppm, preferably about 80 to about 400 ppm, at each stage.

In an embodiment of the invention, nucleating agents, antioxidants, and toners are used as additives during the transesterifying step to improve the rate of crystallization and color.

Nucleating agents useful in the invention include sodium benzoate, nano silica, nano clay, butyl propionic acid methyl ester, ethylene acrylic acid sodium ionomer, micronized sorbitol, sodium salicylates, tungsten trioxide, or a combination thereof. In an embodiment, sodium benzoate is added to about 20 to about 100 ppm, preferably about 30 to about 80 ppm. In another embodiment, nano silica (e.g., Nyacol^{®}, Nanotechnologies, Inc., Austen, TX) is added to about 400 to about 3000 ppm, preferably to about 800 to about 2000 ppm. In another embodiment Nano clay (Nanolin DK2, Zhejiang Fenghong Clay Chemicals Co. Ltd, China) of CEC (Cationic Exchange Capability) 110-120 meq/100g is added at about 100 to about 5000 ppm as a suspension in EG. In yet another embodiment, ethylene acrylic acid sodium ionomer (e.g., Aclyn^{®}, Honeywell, USA) is added to about 50 to about 1000 ppm, preferably about 100 to about 500 ppm to improve the rate of crystallization. In an embodiment, sorbitol is used in the range of about 100 to about 5000 ppm, preferably in the range of about 1000 to about 2000 ppm; sodium salicylate is used in the range of about 10 to about 500 ppm, preferably in the range of about 30 to about 80 ppm; and/or tungsten trioxide is used in the range of about 5 to about 100 ppm, preferably in the range of about 20 to about 80 ppm.

Antioxidants useful in the invention include compounds such as hindered phenols, for example, octadecyl 3,5-di-*t*-tertiary-butyl-4- hydroxyhydrocinnamate (e.g., Irganox 1076, Ciba Specialty Chemicals Corporation, USA), 3,5-di-t-tertiarybutyl-4-hydroxyphenyl propionic acid methyl ester, (e.g., Anox, Songwon, Ind. Co. Ltd., Korea.), or benzenepropionic acid bis(dimethylethyl)hydroxymethyl ester (e.g., Ethanox^{®}, Albemarle Corporation, USA), or a combination thereof octadecyl 3,5-di-*t* -butyl-4-hydroxyhydrocinnamate is used in the range of about 100 to about 150 ppm. Benzenepropionic acid bis(dimethylethyl)hydroxymethyl ester is used in the range of about 100 to about 500 ppm. 3,5-di-*t*-butyl-4-hydroxyphenyl propionic acid methyl ester is used in the range of about 100 to about 300 ppm.

Polysynthern Red GFP (8,9,10,11- Tetrachloro - 12 H - phthaloperin - 12 one - "Red Toner") and Polysynthern Blue RBL (1,4 - Bis(mesitylamino) anthraxquinone - "Blue Toner) (Clariant Pigments & Additives, Switzerland), both as 0.15% EG solution, may be added along with other colorants like cobalt acetate during the transesterification reaction. The toners are added in the range of about 1 to about 4 ppm, preferably about 2 to about 3 ppm, to achieve the best color, e.g., with an International Commission on Illumination (CIE) color value of L greater than about 80 and b* value equal to about -1 to about -4.0.

In an embodiment of the transesterifying step, appropriate quantities of NDC and PDO and the required amount of transesterification catalyst and, optionally, a nucleating agent, a toner, and/or an antioxidant, are placed in the batch reactor. In an embodiment, transesterification is carried out in the esterifier at about 1050 mbar for about 4 to about 7 hours at about 200 °C to about 265°C in the presence of at least one transesterification catalyst. The by-product methanol is removed by distillation. At the end of the transesterification, low molecular weight oligomers (prepolymers) or bis(beta-hydroxypropyl)naphthalate are formed. The prepolymer is transferred to a polyreactor for polymerization, e.g., via a 20 micron filter.

In an embodiment, as illustrated in Example 1, NDC and PDO in a molar ratio (NDC:PDO) of 1:1.43 are placed in an esterification reactor and two transesterification catalysts are added. The transesterification is carried out between about 200 °C and about 245 °C for a period of about 5 to about 6 hours and methanol is removed as a byproduct.

In another embodiment, as illustrated in Example 2, NDC and PDO in a molar ratio (NDC:PDO) of 1:1.4 are placed in an esterification reactor and two transesterification catalysts are added. The transesterification is carried out between about 200 °C and about 240 °C for a periods of about 260 minutes out of which atmospheric distillation is carried out at about 1050 mbar for about 230 minutes and vacuum distillation is carried out at about 500 mbar for about 30 minutes.

In another embodiment, as illustrated in Example 6, NDC and PDO in a molar ratio (NDC:PDO) of 1:1.4 are placed in an esterification reactor and two transesterification catalysts are added. One or more nucleating agents are also added. The transesterification is carried out between about 200 °C and about 245 °C, preferably 220 °C, for a period of about 6 hours and methanol removed as a byproduct. NDC and BDO are then added again such that the molar ratio (NDC:BDO) is 1:1.6 and the transesterification reaction is continued for another 2 hours maintaining the same temperature and pressure.

In an embodiment, the transesterification catalysts are added in combination, either together or sequentially. For example, manganese acetate is an ester interchange catalyst that may be added in the beginning of transesterification. Cobalt acetate may also be added in the beginning of transesterification. Manganese acetate may also be added after cobalt acetate. Tin acts as catalyst both for transesterification and polymerization and therefore may be added in two parts both in the beginning of transesterification and the end of transesterification.

In the invention, end capping agents are used as additives during the polymerizing step while making PTN to reduce the formation of acrolein. Thermal stabilizers and/or toners may also be used as additives.

Thermal stabilizers useful in the invention include phosphorus-based compounds such as thermally stable organic bases such as orthophosphoric acid (OPA), triethylphosphonoacetate (TEPA), or a combination thereof. The thermal stabilizer TEPA is used in the range of about 30 to about 150 ppm and OPA in the range of about 10 to about 60 ppm.

End capping agents useful in the invention include monovalent aromatic hydroxy compounds and their haloformates, monovalent carboxylic acids and their halide derivatives, and carbonic acid derivatives such as ethylene carbonate and combinations thereof. In an embodiment, tetrabutyl phosphonium acetate (TBPA) is used as an end capping agent in the range of about 5 to about 200 ppm, preferably about 10 to about 80 ppm. In another embodiment, ethylene carbonate is used as an end capping agent in the range of about 1,000 to about 30,000 ppm, preferably in the range of about 12,000 to about 25,000 ppm, more preferably to about 15,000 ppm. In the invention, end capping agents are added during the polymerizing step after completion of the polymerizing step to reduce the number of-COOH end groups from greater than about 17 to less than about 3 meq/kg, which also suppresses the formation of acrolein.

In an embodiment, as illustrated in Example 1, the polymerizing step is carried out in a polyreactor after the transesterifying step. One or more polymerization catalysts and thermal stabilizers are added to the prepolymer and the polymerizing step is conducted at very low pressure (e.g., less than about 1mm Hg absolute) at about 240 °C to about 270 °C with a process time of about 4 hours. After reaching the required molecular weight, as indicated by intrinsic viscosity (IV), one or more thermal stabilizers and end capping agents are added and allowed to interact thoroughly with the melt at about 230 °C with a pressure of about 1 mbar for about 30 minutes. The amorphous PTN polymer melt is extruded under nitrogen pressure and collected as pellets.

In another embodiment, as illustrated in Example 2, the polymerizing step is conducted at about 0.5 to about 2 bar gauge in the temperature range of about 240 °C to about 270 °C for about 130 minutes. After reaching the required molecular weight, one or more end capping agents are added and allowed to interact with the melt at about 230 °C with a pressure of about 1 mbar for about 30 minutes.

In another embodiment, as illustrated in Example 6, polymerization is conducted in the presence of a single polymerization catalyst and more than one thermal stabilizer at very low pressure (less than about 1mm Hg absolute) in the temperature range of about 230 °C to about 270 °C, but preferably about 240°C, with a process time of about 4 hours. After reaching the required molecular weight, a thermal stabilizer and one or more end capping agents are added and allowed to interact thoroughly with the melt at about 230 °C, with a pressure of about 1 mbar for about 30 minutes.

In an embodiment, the present invention provides a manufacturing process for producing amorphous PTN of I.V. in the range of about 0.4 to about 0.5 dL/g using a batch reactor system consisting of two or three reactors. In a two reactor system, in an embodiment of the invention, the transesterifying step is completed in the first reactor (esterifier) and transferred via a 20 micron filter to a second reactor followed by the polymerizing step in a second reactor (polyreactor or autoclave). In a three reactor system, in an embodiment of the invention, in between the transesterifier and polyreactor/autoclave steps there is an additional reactor (prepolyreactor) wherein part of the remaining transesterification (about 20 %) under pressure and part of the initial polymerization (up to an I.V. of about 0.2 dL/g) under vacuum are conducted. The differences in the systems primarily result in increased production and better quality of the resin.

In the case of a three reactor system, in an embodiment, the low molecular weight melt is transferred after about 80% of the transesterifying step to a, second prepolyreactor where the residual transesterification and the initial polymerization takes place. Post transesterification and prepolymerization is performed at about 500 to about 250 mbar for about 50 minutes.

Subsequently, the prepolymer melt is transferred to the poly reactor via a 20 micron filter. The polymerizing step is carried out at about 250 to less than about 1 mbar for about 120 minutes, at about 240°C to about 265 °C, under low pressure. After the desired LV. is reached, the amorphous polymer melt is extruded under nitrogen pressure and converted into pellets.

In another embodiment, the invention provides a solid state polymerization (SSP) process by which an amorphous polymer of I.V. of about 0.40 to about 0.50 dL/g is increased to about 0.60 to about 1.0 dL/g. SSP of low LV. amorphous resins (e.g., I.V. of 0.35-0.45 dL/g) to high I.V. crystalline resins (e.g., I.V. of 0.45-0.90 dL/g and above) in the solid state is performed by heating the chips to a temperature of about 180°C to about 200 °C for about 12 to about 24 hours, depending on the final LV. required, in a tumbling batch reactor or in a continuous reactor. In the case of a batch reactor, the reaction is carried out under vacuum at a pressure of less than about 1 mbar. In the case of a continuous reactor, the reaction is carried out in the presence of a counter current of inert gas such as nitrogen at ambient pressure.

The present invention thus provides a process in a batch reactor system, comprising two or three reactors, for PTN polymers with reduced acrolein content by esterifying NDC, or derivatives thereof, with PDO, followed by polymerization and, optionally, SSP.

Practice of the invention will be still more fully understood from the following examples, which are presented herein for illustration only.

### Exemplification

### Example 1: Production of PTN Polymer Substantially Free of Acrolein

About 9.5 kg of Dimethyl 2,6-naphthalenedicarboxylate (NDC) and 4.2 kg of 1,3-Propane Diol (PDO) are placed in an esterification reactor at a molar ratio (NDC:PDO) of about 1:1.43. Manganese acetate (40 ppm as Mn) and cobalt acetate (40 ppm as Co) are added as transesterification catalysts. The esterifying step is carried out between about 200 °C and about 245 °C for a period of about 5 to about 6 hours. Methanol is removed as a byproduct. The prepolymer formed is transferred via a 20 micron filter to a polyreactor. Polymerization catalyst butylstannoic acid is added at about 200 ppm and subsequently phosphorous based thermal stabilizers such as orthophosphoric acid (OPA) and triethylphophonoacetate (TEPA) are added such that the total phosphorus content is 40 ppm, e.g., 20 ppm each. The polymerizing step is conducted at very low pressure (e.g., less than about 1mm Hg absolute) at about 240°C to about 270°C with a process time of about 4 hours. After reaching the required molecular weight, as indicated by intrinsic viscosity (IV), the end capping additives tetrabutyl phosphonium acetate and ethylene carbonate are added to about 50 ppm and 1.5% w/w are added, respectively, and allowed to interact thoroughly with the melt at about 230°C with a pressure of about 1 mbar for 30 minutes. The amorphous PTN polymer melt is extruded under nitrogen pressure and collected as pellets.

Table - I summarizes some characteristics of the amorphous PTN polymer.

**Table I**

| **Serial No.** | **PARAMETER** | **UNIT** | **VALUE** |
|---|---|---|---|
| 1 | Intrinsic Viscosity | dL/g | 0.38 |
| 2 | Carboxyl Number | meq/kg | 2 |
| 3 | Dipropylene Glycol | Wt.% | 0.08 |
| 4 | Acrolein | Ppm | 3.5 |
| 5 | L* amorphous/crystalline | CIE | 55/81 |
| 6 | a* | CIE | -1.0/-1.7 |
| 7 | b* | CIE | -1.8/-1.1 |
| 8 | T_{g} | °C | 80.7 |
| 9 | Tₘ | °C | 205 |
| 10 | T_{ch} | °C | 167 |

| | | | |
|---|---|---|---|
| Note: T_{g} = Glass transition temperature; Tₘ = Melting point; T_{ch} = Crystallization temperature during heating in the second heating cycle. The above three parameters are obtained by differential scanning calorimetry (DSC) with a heat cycle 1 and 2 of about 30 °C to about 300 °C at about 10 °C/minute and rapid cooling cycle from about 300 °C to about 30°C thermal analysis measurements. | | | |

The amorphous PTN is upgraded to higher I.V. by solid state polymerization (SSP). The amorphous PTN resin is precrystallised at about 140 °C in a fluid bed precrystallizer. The cooled precrystallized PTN chips are transferred to a tumbling dryer and the chip temperature is increased from 35°C to 180 °C with nitrogen bleeding for about 6 hours. This is followed by crystallization in which the polyester chips are held at 180°C for about 2 hours at about 0.5 bar gauge pressure and then evacuated to vacuum below about 1 mbar.

Table II summarizes some characteristics of the SSP product.

**Table II**

| **PTN** | **I.V. dL/g** | **Acrolein, ppm** | **L* CIE** | **a* CIE** | **b* CIE** | **Tg °C** | **Tm °C** |
|---|---|---|---|---|---|---|---|
| Amorphous Feed Resin | 0.432 | 3.4 | 57 | -0.8 | -1.6 | 80.7 | 205.9 |
| Final SSP resin | 0.590 | <0.1 (below detectable limit) | 73 | -1.5 | -1.0 | 79.3 | 202.5 |

| | | | | | | | |
|---|---|---|---|---|---|---|---|
| Note: T_{g} = Glass transition temperature; Tₘ = Melting point. | | | | | | | |

### Example 2: Production of PTN Polymer Substantially Free of Acrolein

NDC and PDO are mixed in a 1:1.4 molar ratio. Manganese acetate (40 ppm as Mn) and cobalt acetate (50 ppm as Co) are added as transesterification catalysts. The transesterifying step is carried out between about 200 °C and about 240 °C for a period of about 260 minutes, out of which atmospheric distillation is carried out at about 1050 mbar for about 230 minutes and vacuum distillation is carried out at about 500 mbar for about 30 minutes. The prepolymer formed is transferred to a polyreactor. About 200 ppm of the polymerization catalyst antimony, about 7 ppm of the polymerization catalyst tetrabutyl titanate (TnBT) (as titanium) and about 60 ppm of thermal stabilizer triethyl phosphonoacetate (TEPA) (as phosphorus) are added. The polymerizing step is conducted at about 0.5 to about 2 bar gauge in the temperature range of about 240 °C to about 270 °C for about 130 minutes. After reaching the required molecular weight, about 17 ppm of end capping agent tetrabutylphosphonium acetate (TBPA) and about 14200 ppm end capping agent ethylene carbonate are added and allowed to interact with the melt at about 230 °C with a pressure of about 1 mbar for about 30 minutes. The amorphous polymer melt is extruded under nitrogen pressure and collected as pellets.

### Example 6: Production of PTN Polymer Substantially Free of Acrolein

About 9.05 kg of NDC and about 3.946 kg of PDO are placed in an esterification reactor such that the molar ratio of NDC:PDO is 1:1.4. Manganese acetate (40 ppm as Mn) and cobalt acetate (40 ppm as Co) are added as transesterification catalysts. About 10 ppm of tungsten trioxide, not more than about 1000 ppm of a nanocompound such as nano clay or nanosilica (Nyacol) and about 30 ppm of sodium benzoate are also added as nucleating agents. Transesterification is carried out between about 200°C and about 245 °C, but preferably at about 220°C, for a period of about 6 hours. Methanol is removed as a byproduct. To this, 0.454 kg of NDC and 0.268 kg of 1,4-butanediol (BDO), for *in situ* formation of polybutylene naphthalate (PBN), are added to the esterification reactor such that the molar ratio is about 1:1.6 The transesterification reaction is continued for another 2 hours maintaining the same temperature and pressure. The prepolymer formed is transferred to a polyreactor through a 20 micron filter. A polymerization catalyst such as butylstannoic acid is added such that its ppm is about 200 and subsequently phosphorous based thermal stabilizers such as OPA (as P) at about 50 ppm and about 100 ppm of TEPA (as P) are added. By using organic tin based compounds instead of the conventional Sb or Ti, etc., superior color is obtained in the resin. The polymerizing step is conducted at very low pressure (e.g., less than about 1 mbar) in the temperature range of about 230 °C to about 270 °C, but preferably about 240°C, with a process time of about 4 hours. After reaching the required molecular weight, and capping agents TBPA (about 50 ppm) and ethylene carbonate (about 1.5%), sodium methoxide, sodium phosphate, or sodium citrate (about 0.005%) for tetrahydrofuran (THF) suppression, THF being a byproduct that forms during the *in situ* polymerization of NDC & BDO to PBN, are added and allowed to interact thoroughly with the melt at about 230 °C with a pressure of about 1 mbar for about 30 minutes. The amorphous polymer melt is extruded under nitrogen pressure and collected as pellets.

### Example 7: Production of PTN Polymer Substantially Free of Acrolein

The molar ratio of NDC and PDO is 1:1.2. 9.5 Kg of NDC and 3.5 Kg of PDO are mixed in an esterification reactor. To the above mixture, Manganese acetate (50 ppm as Mn) is added in two equal parts, one at the initial stage and the other at middle of the transesterfication, say after collection of 50% of methanol, and butylstannoic acid (200 ppm as Sn) which is also added in two equal parts, one at the initial stage and the other at end of the transesterfication. Cobalt acetate (35 ppm as Co) and Tungsten trioxide (7 ppm as W) are also added to the esterification reactor. The transesterifcation reaction is carried at about 200 to 235 °C for about 300 minutes. Atmospheric distillation is carried out at about 1050 mbar for about 240 minutes and vacuum distillation is carried out at about 500 mbar for about 60 minutes. The prepolymer formed is transferred to poly reactor. 150 ppm of TEPA (as P) and 5 ppm of TnBT (as Ti) are added to the poly reactor. The polymerization cycle is carried out by increasing the temperature from 235 to 250°C and decreasing the pressure from 500 mbar to about 5 mbar for 150 minutes. After reaching the required molecular weight, end capping agent ethylene carbonate (15000 ppm) and TBPA (20 ppm) are added to the melt and allowed to react thoroughly with the melt. The temperature is maintained at 245 °C and pressure at 5 mbar for about 30 minutes. The amorphous polymer melt is then extruded under nitrogen pressure and collected as pellets.

Table III summarizes some characteristics of the amorphous PTN polymer.

**Table III**

| Example No | IV (dL/g) | Carboxyl number (meq/kg) | Dipropylene glycol wt% | Acrolein (ppm)+ | L* CIE | a* CIE | b* CIE | Tg °C | Tm °C | Tch °C |
|---|---|---|---|---|---|---|---|---|---|---|
| 2. | 0.426 | 2 | 0.07 | 0.61 | 80.9 | -2.0 | -1.5 | 78.1 | 204.5 | 160.6 |
| 6. | 0.380 | 2 | 0.08 | 0.74 | 81.0 | -1.0 | -1.8 | 80.7 | 205.0 | 167.0 |
| 7. | 0.366 | 2 | 0.04 | 0.58 | 82.2 | -1.5 | -0.2 | 77.3 | 203.4 | 138.7 |

| | | | | | | | | | | |
|---|---|---|---|---|---|---|---|---|---|---|
| + - As indicated earlier in Table II, the values for Acrolein are <0.1 ppm (below detectable limit) when the amorphous PTN is subjected to SSP to get the required high I.V. Note: T_{g} = Glass transition temperature; Tₘ = Melting point; T_{ch} = Crystallization temperature during heating in the second heating cycle. | | | | | | | | | | |

## Claims

1. A method of making a polytrimethylene naphthalate (PTN) polymer that is substantially free of acrolein, the method comprising the steps of transesterifying naphthalene dicarboxylic acid dimethyl ester (NDC) and 1,3-Propane diol (PDO) in the presence of a transesterification catalyst to form a prepolymer, and polymerizing the prepolymer in the presence of an additive, thereby forming a polymer that is substantially free of acrolein; wherein:
(a) the transesterification catalysts is at least one compound selected from a group consisting of titanium acetate, calcium acetate, zinc acetate, manganese acetate, antimony trioxide, antimony triacetate, and cobalt acetate;
(b) the transesterifying step is carried out at a temperature of 200°C to 265°C, preferably at 200°C to 250°C; and
**characterised in that**
(c) the transesterification catalyst is added at the start of the transesterifying step; and
(d) the additive comprises at least one end capping agent selected from a group consisting of monovalent aromatic hydroxy compounds and their haloformates, monovalent carboxylic acids and their halide derivatives, carbonic acid derivatives, tetrabutylphosphonium acetate (TBPA), ethylene carbonate, sodium methoxide, sodium phosphate, and sodium citrate.

2. A method as claimed in Claim 1, wherein the or each additive further comprises at least one of a polymerization catalyst and a thermal stabilizer, wherein the thermal stabilizer is at least one compound selected from a group consisting of orthophosphoric acid (OPA) and Triethylphophonoacetate (TEPA) and the polymerization catalyst is at least one compound selected from a group consisting of tetrabutyl titanate (TnBT), antimony trioxide, and butylstannoic acid.

3. A method as claimed in Claim 1 or 2, wherein the transesterifying step is carried out for 4 hours to 7 hours, preferably for 4 hours to 6.2 hours.

4. A method as claimed in Claim 1-3, wherein the transesterifying step comprises at least one distillation step selected from atmospheric distillation and vacuum distillation.

5. A method as claimed in Claim 4, wherein the atmospheric distillation is carried out at about 1050 mbar for 200 minutes to 360 minutes, preferably for 200 minutes to 340 minutes.

6. A method as claimed in Claim 4, wherein the vacuum distillation is carried out at about 500 mbar for 20 minutes to 60 minutes, preferably for 20 minutes to 30 minutes.

7. A method as claimed in Claim 1-6, further comprising the step of transferring the prepolymer to a polyreactor after the transesterifying step.

8. A method as claimed in Claim 1- 7, further comprising a step of precrystallizing the polymer at 80°C to 150°C, preferably from 35°C to 180°C, to form precrystallized chips.

9. A method as claimed in Claim 8, further comprising a step of crystallizing the precrystallized chips by heating with nitrogen bleeding for about 6 hours, followed by crystallization, during which step the polyester chips are held at 180°C for about 2 hours at about 0.5 bar gauge pressure and then evacuated to vacuum below 1 mbar.

10. A method as claimed in Claim 1-9, further comprising an addition of a nucleating agent during the transesterifying step.

11. A method as claimed in Claim 10, wherein the nucleating agent is at least one selected from the group consisting of sodium benzoate, nano silica, nano clay, polybutylene naphthalate (PBN) ethylene acrylic acid sodium ionomer, micronized sorbitol, sodium salicylates, and tungsten trioxide.

12. A method as claimed in Claim 1-11, comprising addition of at least one antioxidant during the transesterifying step.

13. A method as claimed in Claim 12, wherein the antioxidant is at least one selected from the group consisting of octadecyl 3,5-di-t-butyl-4-hydroxyhydrocinnamate, 3,5-di-t-butyl-4-hydroxyphenyl propionic acid methyl ester, benzenepropionic acid and bis(dimethylethyl)hydmxymethyl ester.

14. A method as claimed in Claim 1-13, further comprising an addition of at least one toner during the transesterifying step and/or the polymerizing step.

15. Polytrimethylene naphthalate (PTN) polymer substantially free of acrolein obtainable by any of the method claimed in Claim 1-14.

## Patentansprüche

1. Eine Methode zur Erzeugung eines Polytrimethylen-Naphtalat-(PTN)-Polymers, der mehr oder weniger Acrolein-frei ist, wobei die Methode aus den Schritten der Transesterifizierung von Naphtalindicarbonsäure-Dimethylester (NDC) und 1,3-Propandiol (PDO) in Gegenwart eines Transesterfizierungskatalysators zur Bildung eines Vorpolymers sowie Polymerisation des Vorpolymers in Gegenwart eines Zusatzstoffes besteht, wodurch ein Polymer gebildet wird, der mehr oder weniger Aorolein-frei ist; wobei
(a) der Transesterifizierungskatalysator zumindest eine Verbindung ist, die aus folgenden Gruppe ausgewählt wird, nämlich Titanacetat, Kalciumacetat, Zinkacetat, Manganacetat, Antimontrioxid, Antimontriacetat und Kobaltacetat;
(b) der Schritt der Transesterifizierung bei einer Temperatur von 200°C bis 265°C, vorzugsweise 200°C bis 250°C durchgeführt wird; und
**dadurch gekennzeichnet, dass**
(c) der Transesterifizierungskatalysator zur Beginn des Schritts der Transesterifizierung zugefügt wird; und
(d) der Zusatzstoff zumindest ein Endverkappungsmittel enthält, das aus einer Gruppe bestehend aus monovalenten, aromatischen Hydroxyverbindungen und deren Haloformiaten, monovalenten Carbonsäuren und deren Halogenidderivaten, Carbonsäurederivaten, Tetrabutyl-Phosphoniumacetat (TBPA), Ethylencarbonat, Natriummethoxid, Natriumphosphat und Natriumcitrat ausgewählt wird.

2. Eine Methode entsprechend Anspruch 1, wobei der Zusatzstoff oder jeder der Zusatzstoffe zudem zumindest einen Polymerisierungskatalysator und/oder einen Wärmestabilisator enthält, wobei der Wärmestabilisator zumindest eine Verbindung ist, die aus einer Gruppe bestehend aus Orthophosphorsäure (OPA) und Triethylphosphonoacetat (TEAP) und der Polymerisierungskatalysator zumindest eine Verbindung ist, die aus einer Gruppe bestehend aus Tetrabutyltitanat (TnBT), Antimontrioxid und Butyl-Zinn(IV)-Säure ausgewählt wird.

3. Eine Methode entsprechend Anspruch 1 oder 2, wobei der Schritt der Transesterifizierung für 4 Stunden bis 7 Stunden, vorzugsweise für 4 Stunden bis 6,2 Stunden durchgeführt wird.

4. Eine Methode entsprechend Anspruch 1-3, wobei der Schritt der Transesterifizierung zumindest einen Destillationsschritt, bei dem es sich entweder um atmosphärische oder Vakuumdestillation handelt, umfasst.

5. Eine Methode entsprechend Anspruch 4, wobei die atmosphärische Destillation bei ca. 1050 mbar für 200 Minuten bis 360 Minuten, vorzugsweise für 200 Minuten bis 340 Minuten durchgeführt wird.

6. Eine Methode entsprechend Anspruch 4, wobei die Vakuumdestillation bei ca. 500 mbar für 20 Minuten bis 60 Minuten, vorzugsweise für 20 Minuten bis 30 Minuten durchgeführt wird.

7. Eine Methode entsprechend Anspruch 1-6, die zudem den Schritt der Übertragung des Vorpolymers auf einen Polyreaktor nach dem Schritt der Transesterifizierung umfasst.

8. Eine Methode entsprechend Anspruch 1-7, die zudem einen Schritt der Vorkristallisation des Polymers bei 80°C bis 150°C, vorzugsweise von 35°C bis 180°C umfasst, um vorkristallisierte Chips zu bilden.

9. eine Methode entsprechend Anspruch 8, die zudem einen Schritt der Kristallisation der vorkristallisierten Chips durch Erhitzen mit Stickstoffabzug für ca. 6 Stunden, gefolgt von Kristallisation umfasst ,wobei während dieses Schritts die Polyesterchips für ca. 2 Stunden bei ca. 0,5 Bar Manometerdruck bei 180°C gehalten und dann an Vakuum unter 1 mbar evakuiert werden.

10. Eine Methode entsprechend Anspruch 1-9, die zudem die Addition eines Nukleationsmittels während des Schritts der Transesterifizierung umfasst.

11. Eine Methode entsprechend Anspruch 10, wobei das Nukleationsmittel zumindest eines ist, dass aus der Gruppe bestehend aus Natriumbenzoat, Nano-Silizium, Nano-Ton, Polybutylennapthalat (PBN), Ethylenacrylsäure-Natriumionomer, mikronisiertem Sorbitol, Natriumsalicylat und Wolframtrioxid ausgewählt wird.

12. Eine Methode entsprechend Anspruch 1-11, die zudem die Addition eines Antioxidationsmittels während des Schritts der Transesterifizierung umfasst.

13. Eine Methode entsprechend Anspruch 12, wobei das Antioxidationsmittel zumindest eines ist, dass aus der Gruppe bestehend aus Octadecyl-3,5-di-t-butyl-4-hydroxyhydrocinnamat, 3,5-di-t-butyl-4-hydroxyphenyl-propionisäure-methylester, Bezenpropionsäure und Bis(dimethylethyl)-hydmex-methylester ausgewählt wird.

14. Eine Methode entsprechend Anspruch 1-13, die zudem die Addition von zumindest einem Toner während des Schritts der Transesterifizierung und/oder des Schritts der Polymerisierung umfasst.

15. Polytrimethylen-Naphtalat-(PTN)-Polymer, der mehr oder weniger Acrolein-frei ist, der durch eine der Methoden in den Ansprüchen 1-14 erhältlich ist.

## Revendications

1. Procédé de fabrication d'un polymère de polytriméthylène naphtalate (PTN) pratiquement exempt d'acroléine, le procédé comprenant les étapes consistant en la transestérification d'ester diméthylique de l'acide naphtalène dicarboxylique (NDC) et de 1,3-propane diol (PDO) en présence d'un catalyseur de transestérification pour former un prépolymère, et en la polymérisation du prépolymère en présence d'un additif, formant ainsi un polymère qui est pratiquement exempt d'acroléine,
(a) le catalyseur de transestérification étant au moins un composé sélectionné dans le groupe constitué de l'acétate de titane, de l'acétate de calcium, de l'acétate de zinc, de l'acétate de manganèse, du trioxyde d'antimoine, du triacétate d'antimoine et de l'acétate de cobalt
(b) et l'étape de transestérification étant opérée à une température comprise entre 200 et 265 °C, de préférence entre 200 et 250 °C,
**caractérisé en ce que**
(c) le catalyseur de transestérification est ajouté au début de l'étape de transestérification et
(d) que l'additif comprend au moins un agent de coiffage d'extrémité sélectionné dans le groupe constitué de composés hydroxy aromatiques monovalents et de leurs haloformiates, d'acides carboxyliques monovalents et de leurs dérivés halogénures, de dérivés de l'acide carbonique, de l'acétate de tétrabutylphosphonium (TBPA), du carbonate d'éthylène, du méthoxyde de sodium, du phosphate de sodium et du citrate de sodium.

2. Procédé selon la revendication 1, dans lequel l'additif ou chaque additif comprend en outre au moins un catalyseur de polymérisation et au moins un stabilisant thermique, le stabilisant thermique étant au moins un composé sélectionné dans le groupe constitué de l'acide orthophosphorique (OPA) et du triéthylphosphonoacétate (TEPA) et le catalyseur de polymérisation étant au moins un composé sélectionné dans le groupe constitué du titanate de tétrabutyle (TnBT), du trioxyde d'antimoine et de l'acide butyle stannoïque.

3. Procédé selon la revendication 1 ou 2, dans lequel l'étape de transestérification est opérée pendant 4 à 7 heures, de préférence pendant 4 à 6,2 heures.

4. Procédé selon les revendications 1 à 3, dans lequel l'étape de transestérification comprend au moins une étape de distillation sélectionnée parmi la distillation atmosphérique et la distillation sous vide.

5. Procédé selon la revendication 4, dans lequel la distillation atmosphérique est opérée à environ 1050 mbar pendant 200 à 360 minutes, de préférence pendant 200 à 340 minutes.

6. Procédé selon la revendication 4, dans lequel la distillation sous vide est opérée à environ 500 mbar pendant 20 à 60 minutes, de préférence pendant 20 à 30 minutes.

7. Procédé selon les revendications 1 à 6, comprenant en outre l'étape consistant à transférer le prépolymère dans un réacteur de polymérisation après l'étape de transestérification.

8. Procédé selon les revendications 1 à 7, comprenant en outre une étape consistant en la pré-cristallisation du polymère entre 80 et 150 °C, de préférence entre 35 et 180 °C, pour former des granulés précristallisés.

9. Procédé selon la revendication 8, comprenant en outre une étape consistant en la cristallisation des granulés précristallisés par chauffage sous courant d'azote pendant environ 6 heures suivi d'une cristallisation, étape pendant laquelle les granulés de polyester sont maintenus à 180 °C pendant environ 2 heures à une pression relative d'environ 0,5 bar puis mis sous vide à moins de 1 mbar.

10. Procédé selon les revendications 1 à 9, comprenant en outre l'addition d'un agent de nucléation pendant l'étape de transestérification.

11. Procédé selon la revendication 10, dans lequel l'agent de nucléation est au moins un agent sélectionné dans le groupe constitué de benzoate de sodium, nanosilice, nanoargile, naphtalate de polybutylène (PBN), ionomère de sodium de l'acide éthylène acrylique, sorbitol micronisé, salicylates de sodium et trioxyde de tungstène.

12. Procédé selon les revendications 1 à 11, comprenant l'addition d'au moins un antioxydant pendant l'étape de transestérification.

13. Procédé selon la revendication 12, dans lequel l'antioxydant est au moins un antioxydant sélectionné dans le groupe constitué de l'octadécyl 3,5-di-t-butyle-4-hydroxyhydrocinnamate, de l'ester méthylique de l'acide 3,5-di-t-butyle-4-hydroxyphényl propionique, de l'acide benzène propionique et de l'ester de bis(diméthyléthyl)hydroxyméthyle.

14. Procédé selon les revendications 1 à 13, comprenant en outre l'addition d'au moins un pigment pendant l'étape de transestérification et/ou l'étape de polymérisation.

15. Polymère de polytriméthylène naphtalate (PTN) pratiquement exempt d'acroléine obtenu par l'un quelconque des procédés revendiqués dans les revendications 1 à 14.
